# FASCICULE DE BREVET EUROPEEN

(11) **EP 0 825 431 B1**
(45) Date de publication et mention de la délivrance du brevet: **14.05.2003**
(21) Numéro de dépôt: 97401940.8
(22) Date de dépôt: 18.08.1997
(51) Int. Cl.: G01N 21/27, G01J 3/28

(54) **Méthode d'étalonnage d'un appareil spectroscopique**
Verfahren zur Kalibrierung eines spektroskopischen Gerätes
Method for calibrating spectroscopic apparatus

(30) Priorité: 19.08.1996 FR 9610272
(43) Date de publication de la demande: 25.02.1998
(73) Titulaire: Labmetrix Technologies I&T, 95913 Roissy Charles de Gaulle (FR)
(72) Inventeur: Njamfa, Serge, 95240 Cormeilles En Parisis (FR)
(74) Mandataire: Le Forestier, Eric

(56) Documents cités:
- EP-A- 0 658 751
- WO-A-86/00406
- US-A- 3 645 627
- US-A- 5 212 537

## Description

La présente invention concerne de manière générale l'étalonnage d'appareils spectroscopiques et plus particulièrement l'étalonnage d'un organe fournissant un faisceau optique mono-chromatique placé dans un appareil spectroscopique, quand l'appareil spectroscopique est de type comprenant une source lumineuse, un boîtier destiné à contenir un élément de mesure illuminé par la source et un capteur apte à capter au moins un faisceau lumineux monochromatique sortant de ce boîtier après interaction avec l'élément de mesure.

On entend ici par appareil spectroscopique, tout appareil apte par exemple à enregistrer ou à mesurer l'intensité d'un spectre lumineux comprenant une ou plusieurs raie(s) spectroscopique(s), tel que par exemple un détecteur photométrique, un détecteur spectrofluorimétrique ou encore un détecteur spectrophotomètre.

Un inconvénient des dispositifs d'étalonnage de l'état de la technique, est qu'ils fonctionnent tous à des longueurs d'ondes λ appartenant au domaine du visible.

En conséquence, la présente invention propose un nouveau dispositif d'étalonnage d'un appareil spectroscopique, simple et économique et qui permet d'étalonner ledit appareil spectroscopique sur une longueur d'onde λ donnée quelconque appartenant au domaine du visible ou bien au domaine de l'ultra-violet.

On connait en outre de EP658751, un procédé de traitement de données optiques recueillies en sortie d'un spétrophotométre, dans lequel on règle le traitement à effectuer en injectant des faisceaux à des longueurs d'ondes précisemment choisies dans le spétrophotométre.

Pour résoudre ces inconvenients, on propose un procédé selon la revendication 1.

Selon un mode de mise en oeuvre avantageux dudit procédé d'étalonnage conforme à la présente invention, l'adaptateur comprend d'une part un boîtier dont au moins deux parois perpendiculaires sont munies de deux ouvertures respectives, une ouverture étant raccordée à la fibre optique et une autre ouverture étant positionnée en regard dudit dispositif optique à étalonner, et d'autre part au moins un miroir placé à l'intérieur dudit boîtier et orienté en regard desdites ouvertures de sorte qu'un rayon optique entrant par une des ouvertures sorte par l'autre, et réciproquement.

La description qui va suivre en regard des dessins annexés, donnés à titre d'exemples non limitatifs, fera bien comprendre en quoi consiste l'invention et comment elle peut être réalisée.
Sur les dessins annexés :
- la figure 1 représente un schéma de principe d'un détecteur spectrofluorimétrique,
- la figure 2 représente un schéma de principe du dispositif d'étalonnage selon l'invention du détecteur spectrofluorimétrique de la figure 1,
- la figure 3a représente un adaptateur du dispositif d'étalonnage de la figure 2,
- la figure 3b représente un autre adaptateur du dispositif d'étalonnage de la figure 2,
- la figure 3c représente une variante de l'adaptateur du dispositif d'étalonnage de la figure 2,
- la figure 3d représente une autre variante de l'adaptateur du dispositif d'étalonnage de la figure 2,
- la figure 4 représente une vue schématique en coupe d'un spectrophotomètre,
- la figure 5 représente une vue partielle en coupe d'un dispositif d'étalonnage conforme à l'invention incorporé dans le spectrophotomètre de la figure 4,
- la figure 6 représente un schéma de principe du dispositif d'étalonnage selon l'invention du spectrophotomètre de la figure 4,
- la figure 7a représente une vue de détail en coupe d'un premier mode de réalisation de l'adaptateur du dispositif d'étalonnage de la figure 6,
- la figure 7b représente un deuxième mode de réalisation de l'adaptateur du dispositif d'étalonnage de la figure 6.

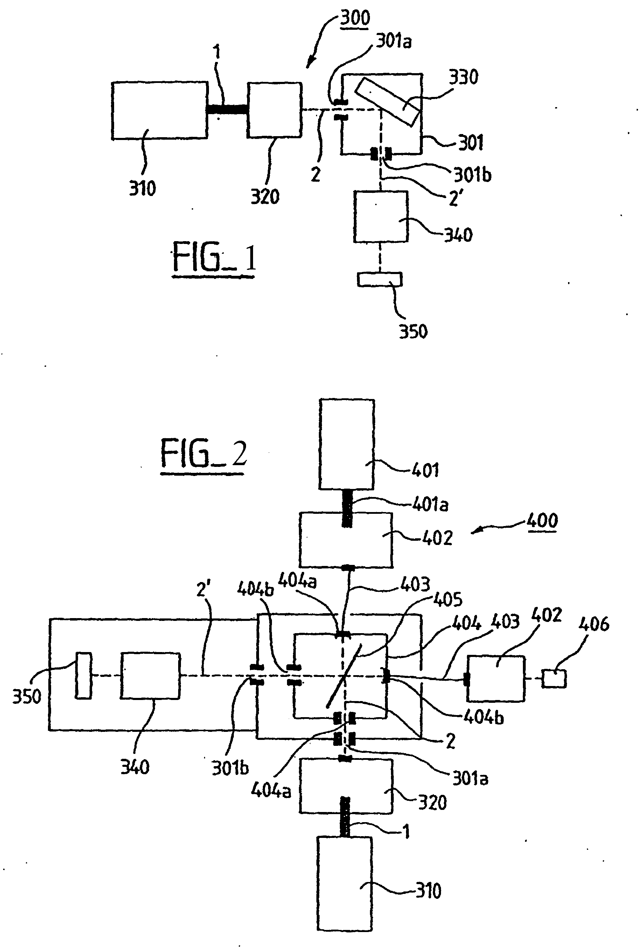

La figure 1 représente un schéma d'un détecteur spectrofluorimétrique 300. Un tel détecteur spectrofluorimétrique 300 comprend une source lumineuse 310 apte à émettre un faisceau lumineux polychromatique 1 en direction d'un monochromateur d'excitation 320 qui fournit un faisceau lumineux monochromatique d'excitation 2 en direction d'une cellule de mesure 330. Cette cellule de mesure 330 est disposée à l'intérieur d'un boîtier 301 pourvu de deux ouvertures dont une ouverture d'entrée 301a par lequel arrive le faisceau lumineux monochromatique d'excitation 2. Sous l'effet dudit faisceau lumineux monochromatique d'excitation 2, la cellule de mesure 330 émet par fluorescence un faisceau lumineux monochromatique 2' en direction d'un monochromateur d'émission 340 via une ouverture de sortie 301b du boîtier 301 dans lequel se trouve ladite cellule de mesure 330.

Le monochromateur d'émission 340 est apte à transmettre ledit faisceau lumineux monochromatique de fluorescence résultant à une photodiode 350.

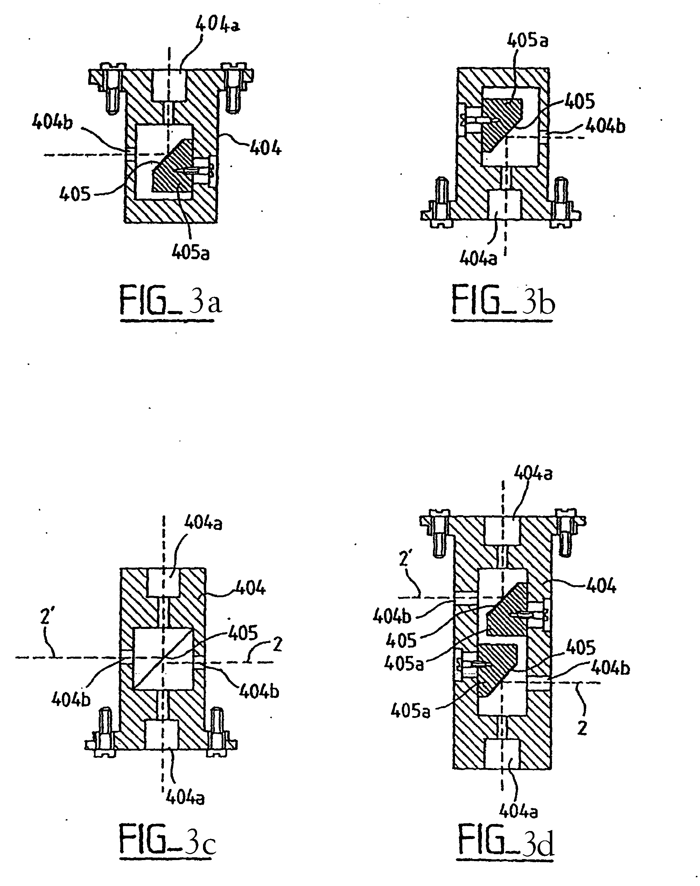

En référence aux figures 2, 3a, 3c et 3d, le dispositif d'étalonnage 400 du détecteur spectrofluorimétrique 300 représenté sur la figure 1, comprend une source lumineuse 401 qui alimente par un faisceau lumineux polychromatique 401a un monochromateur calibré 402 apte à fournir un faisceau lumineux monochromatique à une longueur d'onde λ donnée. En sortie du monochromateur calibré 402, il est prévu une première fibre optique 403 de transmission dont la sortie est raccordée à un adaptateur 404. L'adaptateur 404 comporte une première entrée 404a où se raccorde la première fibre optique 403 et une première sortie 404b placée en regard du monochromateur d'émission 340 à étalonner.

Comme le montre plus particulièrement la figure 2, l'adaptateur 404 est disposé à l'intérieur du boîtier 301 à la place de la cellule de mesure 330. La première entrée 404a et la première sortie 404b de l'adaptateur sont disposées sur deux parois perpendiculaires du boîtier d'adaptateur 404. La première sortie 404b du boîtier d'adaptateur est alignée avec à la sortie 301b du boîtier 301 du détecteur spectrofluorimétrique 300.

En réglant le monochromateur calibré 402 sur une longueur d'onde λ donnée on peut tester la capacité du monochromateur d'émission 340 à fournir une longueur d'onde exacte et ainsi l'étalonner.
L'adaptateur 404 du dispositif d'étalonnage 400 comporte en outre selon les modes de réalisation représentés sur les figures 2, 3c et 3d une deuxième entrée 404a disposée en regard du monochromateur d'excitation 320 et une deuxième sortie 404b qui est raccordée à une deuxième fibre optique 403 de transmission elle-même connectée à un autre dispositif optique d'étalonnage 402.
Selon le mode de réalisation représenté plus particulièrement sur la figure 3c, l'adaptateur comporte dans son boîtier d'adaptateur sur deux parois parallèles hautes et basses les première et deuxième entrées 404a positionnées en regard l'une de l'autre et sur les deux parois latérales parallèles les première et deuxième sorties 404b positionnées en regard l'une de l'autre.

Selon ce mode de réalisation, il est prévu à l'intérieur du boîtier d'adaptateur un miroir 405 présentant deux faces opposées réfléchissantes. Une première face réfléchissante du miroir 405 est disposée en regard de la première entrée 404a et de la première sortie 404b de l'adaptateur. Une deuxième face réfléchissante du miroir 405 est disposée en regard de la deuxième entrée 404a et de la deuxième sortie 404b du boîtier d'adaptateur. Le miroir 405 est orienté de sorte qu'un rayon optique 2, 2' entrant par une entrée 404a de l'adaptateur 404 sort par la sortie associée 404b de l'adaptateur.

Plus particulièrement, le miroir 405 est ici orienté à 45 degré par rapport à deux axes perpendiculaires, un premier axe passant par les première et deuxième entrées 404a et un deuxième axe perpendiculaire passant par les première et deuxième sorties 404b de l'adaptateur 404.

Selon une variante de mode de réalisation de l'adaptateur 404 représentée sur la figure 3d, on peut prévoir que les sorties d'adaptateur 404b soient positionnées dans deux parois parallèles latérales du boîtier d'adaptateur 404 de manière décalée en hauteur. Ainsi, selon ce mode de réalisation, il est prévu à l'intérieur du boîtier d'adaptateur deux miroirs 405, un premier miroir 405 présentant une face réfléchissante tournée vers les premières entrée et sortie 404a, 404b et orienté de manière à ce qu'un rayon optique entrant par l'entrée supérieure 404a sorte par la première sortie 404b associée de l'adaptateur, et un second miroir 405 dont la face réfléchissante est tournée vers les deuxièmes entrée et sortie 404a, 404b et est orienté de manière qu'un rayon optique entrant par l'entrée inférieure 404a de l'adaptateur sorte par la deuxième sortie associée 404b de l'adaptateur.

Chacun des miroirs 405 est fixé par l'intermédiaire d'un support 405a à une paroi latérale du boîtier d'adaptateur.

Chacun des boîtiers d'adaptateur représentés sur les figures 3c et 3d se positionne à l'intérieur du boîtier 301 du détecteur spectrofluorimétrique à la place de la cellule de mesure avec une sortie d'adaptateur 404b en regard de la sortie 301b du boîtier et une entrée d'adaptateur 404a en regard de l'entrée du boîtier 301a.

Selon un premier mode de réalisation, on peut prévoir que l'autre dispositif d'optique d'étalonnage 402 prévu pour l'étalonnage du monochromateur d'excitation 320 soit un monochromateur calibré apte à fournir un faisceau lumineux monochromatique à une longueur d'onde λ donnée, et dont la sortie est reliée à une photodiode 406.

Ainsi, en faisant varier pas à pas le monochromateur calibré 402, on arrive à ajuster la longueur d'onde de celui-ci avec celle émise par le monochromateur d'excitation 320, le signal recueilli par la photodiode 406 devenant alors maximum quant les longueurs d'onde sont accordées.

Selon un deuxième mode de réalisation, on peut prévoir que l'autre dispositif optique d'étalonnage 402 servant à l'étalonnage du monochromateur d'excitation 320 soit constitué par un réseau optique 402 fournissant une pluralité de faisceaux lumineux monochromatiques indépendants relié en sortie à une barrette de photodiodes 406.
Ainsi, la diode de la barrette de photodiode 406 recevant le plus d'énergie correspondra à la longueur d'onde incidente émise par le monochromateur d'excitation 320.

Par ailleurs, selon une variante de réalisation représentée plus particulièrement sur les figures 3a et 3b, on peut prévoir deux adaptateurs indépendants 404, chaque adaptateur 404 étant associé à un monochromateur à étalonner, le monochromateur d'excitation et le monochromateur d'émission.

La figure 3a représente un adaptateur destiné à l'étalonnage du monochromateur d'émission 340 qui comporte un boîtier d'adaptateur pourvu sur deux parois perpendiculaires d'une entrée 404a et d'une sortie 404b. L'entrée 404a se trouve sur la paroi supérieure et à l'intérieur du boîtier d'adaptateur il est prévu un miroir présentant une face réfléchissante tournée vers l'entrée 404a et la sortie 404b du boîtier d'adaptateur 404. Ce miroir 405 est supporté par un support 405a vissé dans la paroi latérale du boîtier 404 opposée à celle pourvue de la sortie 404b. Le miroir est orienté à 45 degrés par rapport aux deux axes perpendiculaires passant par l'entrée 404a et la sortie 404b de sorte qu'un rayon optique entrant par l'entrée 404a de l'adaptateur sorte par la sortie 404b. Cet adaptateur est destiné à être positionné dans le boîtier 301 du détecteur spectrofluorimétrique de sorte que la sortie 404b de l'adaptateur se trouve en regard de la sortie 301b du boîtier 301 face au monochromateur d'émission 340.

En outre, pour étalonner le monochromateur d'excitation 301 du détecteur spectrofluorimétrique 300, on peut prévoir comme le montre plus particulièrement la figure 3b, un adaptateur 404 comprenant un boîtier d'adaptateur pourvu sur sa surface inférieure d'une entrée 404a et sur sa surface latérale perpendiculaire une sortie 404b, l'entrée 404a faisant face à l'entrée 301a du boîtier 301 du détecteur spectrofluorimétrique 300 positionnée en regard du monochromateur d'excitation 320.

Il est prévu à l'intérieur du boîtier d'adaptateur un miroir 405 dont la face réfléchissante est tournée vers les entrée et sortie 404a, 404b du boîtier d'adaptateur. Il est orienté de manière à ce qu'un rayon optique entrant par l'entrée 404a du boîtier d'adaptateur sorte par la sortie 404b. Le miroir 405 est supporté par un support 405a vissé dans une paroi latérale du boîtier opposée à celle pourvue de la sortie 404b.
On notera ici que l'adaptateur de la figure 3d est une variante qui joue le rôle des adaptateurs des figures 3a et 3b réunies.

Les adaptateurs représentés sur les figures 3a à 3d seront utilisés plus particulièrement pour étalonner un détecteur spectrofluorimétrique qui émet dans le domaine du visible et de l'ultra-violet.

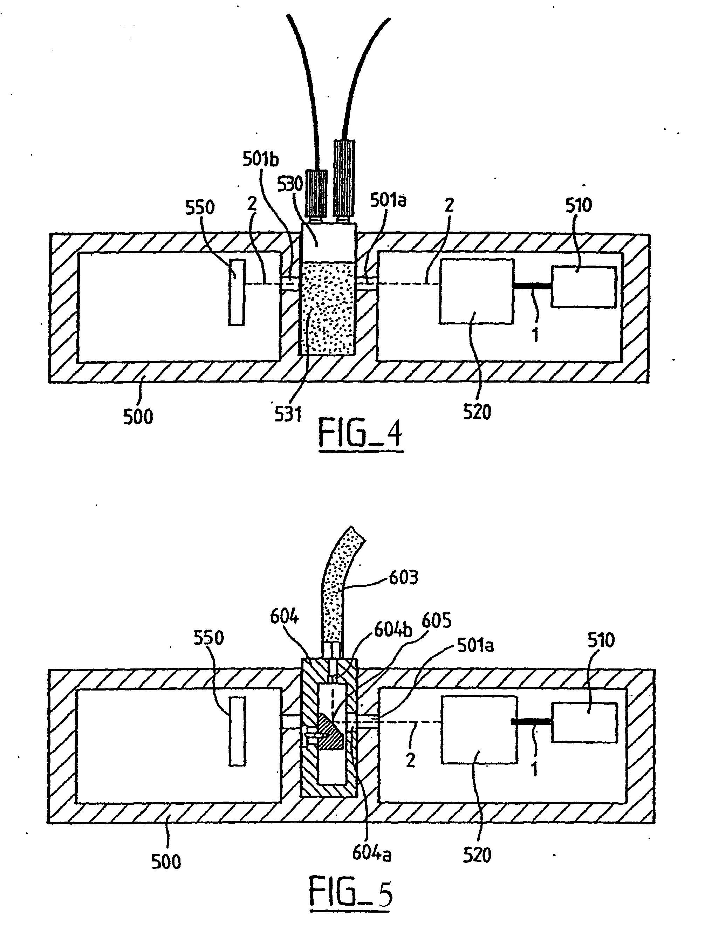

Sur la figure 4, on a représenté un détecteur spectrophotomètre 500 qui permet de mesurer l'absorbance d'un produit mobile ou statique contenu dans une cuve de mesure. En fonction de l'absorbance mesurée, il est possible de déterminer la concentration du produit. Cette absorbance dépend de la longueur d'onde du faisceau monochromatique émis en direction de ce produit.

Plus particulièrement, comme le montre la figure 4, ce détecteur spectrophotomètre 500 comporte une source lumineuse 510 qui alimente par un faisceau lumineux polychromatique 1 un monochromateur 520. Ce monochromateur 520 fournit en sortie un faisceau lumineux monochromatique 2 à une longueur d'onde λ donnée qui se propage via une ouverture 501a prévue dans le boîtier du détecteur spectrophotomètre 500 à l'intérieur d'une cuve de mesure 530 alimentée en produit 531. Le faisceau lumineux 2 sortant de cette cuve de mesure traverse une ouverture 501b prévue dans le boîtier du détecteur spectrophotomètre et est capté par une photodiode 550.

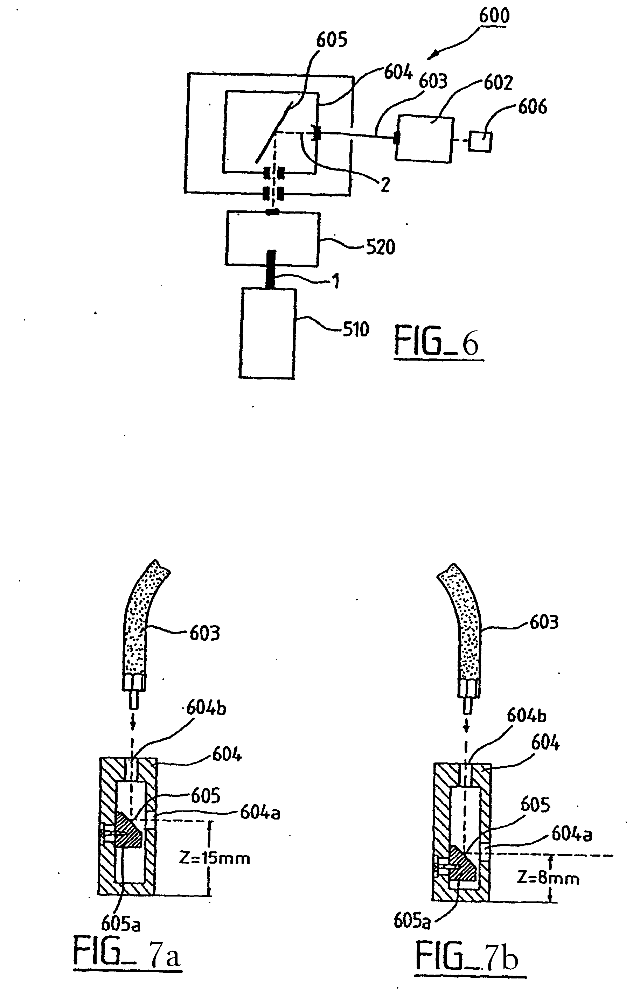

Sur les figures 5 et 6, on a représenté le dispositif d'étalonnage 600 conforme à la présente invention apte à étalonner le détecteur spectrophotomètre 500.

Comme on peut le voir sur ces figures, le dispositif d'étalonnage 600 comporte un adaptateur 604 positionné à la place de la cuve de mesure 530 dans le détecteur spectrophotomètre 500. Cet adaptateur 604 comporte une ouverture d'entrée 604a prévue dans une paroi latérale du boîtier d'adaptateur et une ouverture de sortie 604b prévue sur la paroi supérieure du boîtier 604, paroi supérieure perpendiculaire à la paroi latérale. L'ouverture d'entrée 604a du boîtier d'adaptateur est positionné en regard de l'ouverture 501a du boîtier du détecteur spectrophotomètre face au monochromateur à étalonner 520, et l'ouverture de sortie 604b du boîtier d'adaptateur est raccordée à une fibre optique 603 de transmission connectée elle-même à un dispositif d'étalonnage 602.

A la sortie de ce dispositif d'étalonnage 602, il est prévu un capteur 606.

A l'intérieur du boîtier d'adaptateur 604 il est prévu un miroir 605 dont la face réfléchissante est placée en regard des ouvertures d'entrée 604a et de sortie 604b de l'adaptateur, et orienté de sorte qu'un rayon optique entrant par l'ouverture d'entrée 604a sorte par l'ouverture de sortie 604b, et réciproquement.

Selon le mode de réalisation représenté sur la figure 7a, le miroir est placé à l'intérieur du boîtier d'adaptateur à une distance, de l'ordre 15 mm du fond du boîtier d'adaptateur au niveau de l'ouverture d'entrée 604a dudit boîtier d'adaptateur.

Selon la variante représentée sur la figure 7b, le miroir est positionné dans le fond du boîtier d'adaptateur à une hauteur de l'ordre de 8 mm dudit fond du boîtier d'adaptateur au niveau de l'ouverture d'entrée 604a du boîtier d'adaptateur.
Ces deux variantes correspondent à deux variantes de détecteur spectrophotomètre comportant des sorties 501a positionnées aux hauteurs 15 mm et 8 mm respectives.

En sortie de la fibre optique 603 raccordée à l'ouverture de sortie 604b de l'adaptateur, on peut prévoir un monochromateur calibré 602 apte à fournir un faisceau lumineux monochromatique calibré à une longueur d'onde λ donnée. Ce monochromateur calibré 602 est alors relié en sortie à une photodiode 606.

Ainsi, en faisant varier pas à pas la longueur d'onde λ du monochromateur calibré 602, on règle celui-ci sur la longueur d'onde λ du signal incident fourni par le monochromateur d'excitation de 520 du détecteur spectrophotomètre, et la photodiode reçoit alors un signal maximum.

On peut également prévoir en variante, que le dispositif d'étalonnage 602 soit un réseau optique apte à fournir une pluralité de faisceaux lumineux monochromatiques indépendants. La sortie du réseau optique est raccordée à une barrette de photodiodes 606. Dans ce cas, la diode de la barrette de photodiodes 606 recevant le plus d'énergie correspondra à la longueur d'onde incidente émise par le monochromateur d'excitation 520 à étalonner.

La présente invention n'est nullement limitée aux modes de réalisation décrits et représentés.

## Revendications

1. Procédé d'étalonnage d'un organe fournissant un faisceau optique monochromatique (320,340,520), placé dans un appareil spectroscopique (300 ; 500) qui comprend :
- une source lumineuse (310 ; 510),
- un boîtier (301,501) recevant une cellule de mesure (330,530) incluant un produit devant faire l'objet d'une mesure optique losqu'illuminé par la source (310,510),
- un capteur (350 ; 550) apte à capter au moins un faisceau lumineux monochromatique (2, 2') sortant de ce boîtier (301,501) après interaction avec le produit (330, 530) faisant l'objet d'une mesure, dans lequel procédé on fournit:
- un dispositif optique d'étalonnage (402 ; 602) apte à fournir au moins un faisceau lumineux monochromatique,
- un adaptateur (404 ; 604) à deux ouvertures (404a, 404b, 604a, 604b) en communication optique l'une avec l'autre;
- une fibre optique (203 ; 403 ; 603) dont une extrémité est raccordée au dispositif d'étalonnage et l'autre extrémité est raccordée à une première des ouvertures (404a,404b) de l'adaptateur (404 ; 604) pour la transmission du faisceau lumineux monochromatique entre ledit dispositif optique d'étalonnage (202 ; 402 ; 502) et ledit adaptateur (204 ; 404 ; 604), et réciproquement, le procédé étant **caracterisé en ce qu'**on place l'adaptateur (404,604) dans le boîtier de mesure (301,501) à la place de la cellule de mesure (330,530), de telle façon que la seconde des ouvertures (404b, 604a) de l'adaptateur se trouve en regard de l'organe à étalonner (320,340,520).

2. Procédé d'étalonnage selon la revendication 1, **caractérisé en ce que** l'adaptateur ( 404 ; 604) comprend d'une part un boîtier dont au moins deux parois perpendiculaires sont munies de deux ouvertures respectives (404a, 404b ; 604a, 604b), une ouverture (404a ; 604a) étant raccordée à la fibre optique (403 ; 603) et une autre ouverture (404b ; 604b) étant positionnée en regard dudit organe optique à étalonner (320, 340 ; 520), et d'autre part, au moins un miroir (405 ; 605) placé à l'intérieur dudit boîtier, orienté en regard desdites ouvertures (404a, 404b ; 604a, 604b) de sorte qu'un rayon optique entrant par une des ouvertures sorte par l'autre, et réciproquement.

3. Procédé d'étalonnage selon l'une des revendications 1 ou 2, dans lequel on étalonne un détecteur spectrofluorimétrique (300) qui comprend une source lumineuse (310) qui alimente un monochromateur d'excitation à étalonner (320), apte à fournir un faisceau lumineux monochromatique d'excitation (2) en direction d'une cellule de mesure (330) qui sous l'effet dudit faisceau lumineux monochromatique d'excitation (2) émet par fluorescence un faisceau lumineux monochromatique (2') en direction d'un monochromateur d'émission à étalonner (340) apte à transmettre ledit faisceau lumineux monochromatique de fluorescence résultant à une photodiode (350), **caractérisé en ce qu'**à la place de ladite cellule de mesure (330) il est prévu ledit adaptateur (404) comprenant une première entrée (404a) raccordée à une première fibre optique (403) et une première sortie (404b) placée en regard du monochromateur d'émission à étalonner (340), et **en ce que** l'on fournit un dispositif optique d'étalonnage qui est un monochromateur calibré (404) apte à fournir un faisceau lumineux monochromatique à une longueur d'onde λ donnée, alimenté par une source lumineuse (401) et comportant une sortie connectée à l'entrée de la première fibre optique (403).

4. Procédé d'étalonnage (400) selon la revendication 3, **caractérisé en ce que** ledit adaptateur comprend en outre une deuxième entrée (404a) placée en regard du monochromateur d'excitation à étalonner (320) et une deuxième sortie (404b) raccordée à une deuxième fibre optique (403) connectée à un autre dispositif d'étalonnage (402) apte à fournir un faisceau lumineux monochromatique à une longueur d'onde λ donnée, dont la sortie est raccordée à un capteur (406) apte à capter ledit faisceau lumineux monochromatique émis par ce dernier.

5. Procédé d'étalonnage (400) selon la revendication 4, **caractérisé en ce que** ledit adaptateur (404) comporte un boîtier dont deux parois parallèles opposées sont pourvues des première et deuxième entrées (404a) positionnées en regard l'une de l'autre, et dont les deux autres parois parallèles sont pourvues des première et deuxième sorties (404b).

6. Procédé d'étalonnage (400) selon la revendication 5, **caractérisé en ce que** les première et deuxième sorties (404b) sont positionnées en regard l'une de l'autre, et **en ce qu'**il est prévu à l'intérieur dudit boîtier d'adaptateur (404) un miroir (405) à double faces réfléchissantes dont une première face réfléchissante est positionnée en regard de la première entrée (403) et de la première sortie (404b), et dont une deuxième face réfléchissante est positionnée en regard de la deuxième entrée (404a) et de la deuxième sortie (404b), ledit miroir (405) étant orienté de manière qu'un rayon optique entrant par la première entrée, respectivement la deuxième entrée, sorte par la première sortie, respectivement par la deuxième sortie.

7. Procédé d'étalonnage (400) selon la revendication 5, **caractérisé en ce que** les première et deuxième sorties (404b) sont positionnées de manière décalée, et **en ce qu'**il est prévu à l'intérieur du boîtier d'adaptateur (404) un premier miroir (405) dont la surface réfléchissante est placée en regard des premières entrée et sortie (404a, 404b) et un deuxième miroir (405) dont la surface réfléchissante est positionnée en regard des deuxièmes entrée et sortie (404a, 404b), le premier miroir (405) étant orienté de sorte qu'un rayon optique entrant par la première entrée (404a) sorte par la première sortie (404b) et-le deuxième miroir étant orienté de manière qu'un rayon optique entrant par la première entrée (404a) sorte par la deuxième sortie (404b).

8. Procédé d'étalonnage (400) selon l'une des revendications 1 ou 2 dans lequel on étalonne un détecteur spectrofluorimétrique (300) qui comprend une source lumineuse (310) qui alimente un monochromateur d'excitation (320) apte à fournir un faisceau lumineux monochromatique d'excitation (2) en direction d'une cellule de mesure (330) qui sous l'effet dudit faisceau lumineux monochromatique d'excitation (2) émet par fluorescence un faisceau lumineux monochromatique (2') en direction d'un monochromateur d'émission (340) apte à transmettre ledit faisceau lumineux monochromatique de fluorescence résultant à une photodiode (350), **caractérisé en ce qu'**à la place de ladite cellule de mesure (330), il est prévu ledit adaptateur (404) comprenant une entrée (404a) placée en regard du monochromateur d'excitation à étalonner (320) et une sortie (404b) raccordée à une fibre optique (403) connectée en sortie au dispositif optique d'étalonnage (402).

9. Procédé d'étalonnage (400) selon l'une quelconque des revendications 4 à 8, **caractérisé en ce que** le dispositif optique d'étalonnage du monochromateur d'excitation à étalonner (320), est un monochromateur calibré (402) apte à fournir un faisceau lumineux monochromatique à une longueur d'onde λ donnée raccordée en sortie à une photodiode (406).

10. Procédé d'étalonnage (400) selon l'une quelconque des revendications 4 à 8, **caractérisé en ce que** le dispositif optique d'étalonnage du monochromateur d'excitation à étalonner (320), est un réseau optique (402) apte à fournir une pluralité de faisceaux lumineux monochromatiques indépendants, raccordé en sortie à une barrette de photodiodes (406).

11. Dispositif d'étalonnage (600) selon l'une des revendications 1 ou 2, dans lequel on étalonne un détecteur spectrophotomètre (500) qui comprend une source lumineuse (510) qui alimente un monochromateur d'excitation (520) apte à fournir un faisceau lumineux monochromatique d'excitation (2) en direction d'un produit (531) positionné à l'intérieur d'une cuve de mesure (530), le faisceau lumineux monochromatique (2) sortant de ladite cuve de mesure (530) étant capté par une photodiode (550), **caractérisé en ce qu'**à la place de ladite cuve de mesure (530), il est prévu ledit adaptateur (604) comprenant un boîtier dont deux parois perpendiculaires munies de deux ouvertures respectives (604a, 604b), une ouverture d'entrée (604a) positionnée en regard de la sortie du monochromateur d'excitation à étalonner (520) et une ouverture de sortie (604b) étant raccordée à la fibre optique (603).

12. Procédé d'étalonnage (600) selon la revendication 11, **caractérisé en ce qu'**il est prévu à l'intérieur du boîtier d'adaptateur (604) un miroir (605) dont la face réfléchissante est positionnée en regard desdites ouvertures (604a, 604b) de telle sorte qu'un rayon optique entrant par l'ouverture d'entrée (604a) sorte par l'ouverture de sortie (604b), ledit miroir (605) étant placé à une hauteur de l'ordre de 15 mm du fond du boîtier d'adaptateur.

13. Procidé d'étalonnage selon la revendication 11, **caractérisé en ce qu'**il est prévu à l'intérieur du boîtier d'adaptateur (604) un miroir (605) positionné à une hauteur de l'ordre de 8 mm du fond dudit adaptateur, la face réfléchissante du miroir (605) étant placée en regard desdites ouvertures (604a, 604b), ledit miroir étant orienté de sorte qu'un rayon optique entrant par l'ouverture d'entrée (604a) sorte par l'ouverture de sortie (604b).

14. Procédé d'étalonnage (600) selon l'une des revendications 11 à 13, **caractérisé en ce que** le dispositif optique d'étalonnage prévu à la sortie de la fibre optique (603) est un monochromateur calibré (602) fournissant un faisceau lumineux monochromatique à une longueur d'onde λ donnée, ledit monochromateur calibré étant raccordé en sortie à une photodiode (606).

15. Procédé d'étalonnage (600) selon l'une des revendications 11 à 13, **caractérisé en ce que** le dispositif optique d'étalonnage (602) raccordé à la sortie de là fibre optique (603) est un réseau optique (602) apte à fournir une pluralité de faisceaux monochromatiques indépendants, dont la sortie est raccordée à une barrette de photodiodes (606).

## Patentansprüche

1. Verfahren zum Eichen eines Organs, das einen monochromatischen optischen Strahl (320, 340, 520) liefert, das in einem spektroskopischen Gerät (300; 500) plaziert ist, das folgendes umfaßt:
- eine Lichtquelle (310, 510),
- ein Gehäuse (301, 501), das eine Meßzelle (330, 530) aufnimmt, die ein Produkt einschließt, das Gegenstand einer optischen Messung sein soll, wenn es von der Quelle (310, 510) beleuchtet wird,
- einen Sensor (350; 550), der geeignet ist, wenigstens einen monochromatischen Lichtstrahl (2, 2') zu erfassen, der aus diesem Gehäuse (301, 501) nach Wechselwirkung mit dem Produkt (330, 530) austritt, das Gegenstand einer Messung ist,
wobei im Verfahren folgendes bereitgestellt wird:
- eine optische Eichvorrichtung (402; 602), die geeignet ist, wenigstens einen monochromatischen Lichtstrahl zu liefern,
- einen Adapter (404; 604) mit zwei Öffnungen (404a, 404b; 604a, 604b), die miteinander optisch kommunizieren;
- eine optische Faser (203; 403; 603), deren eines Ende mit der Eichvorrichtung verbunden ist, und deren anderes Ende (404a, 604b) mit einer ersten Öffnung der Öffnungen (404a, 604b) des Adapters (404; 604) für die Übertragung des monochromatischen Lichtstrahls zwischen der optischen Eichvorrichtung (202; 402; 502) und dem Adapter (204; 404; 604) verbunden ist, und umgekehrt,
wobei das Verfahren **dadurch gekennzeichnet ist, daß** der Adapter (404, 604) in das Meßgehäuse (301, 501) an der Stelle der Meßzelle (330, 530) plaziert wird, derart, daß die zweite Öffnung der Öffnungen (404b, 604a) des Adapters sich gegenüber dem zu eichenden Organ (320, 340, 520) befindet.

2. Eichverfahren nach Anspruch 1, **dadurch gekennzeichnet, daß** der Adapter (404; 604) einerseits ein Gehäuse umfaßt, bei dem wenigstens zwei senkrechte Wände mit zwei entsprechenden Öffnungen (404a, 404b; 604a, 604b) ausgestattet sind, wobei eine Öffnung (404a; 604a) mit der optischen Faser (403; 603) verbunden ist, und eine andere Öffnung (404b; 604b) gegenüber dem zu eichenden optischen Organ (320, 340; 520) positioniert ist, und andererseits wenigstens einen Spiegel (405; 605), der im Inneren des Gehäuses plaziert ist, und den Öffnungen (404a, 404b; 604a, 604b) gegenüberliegend ausgerichtet ist, derart, daß ein optischer Strahl, der durch eine der Öffnungen eintritt, durch die andere austritt, und umgekehrt.

3. Eichverfahren nach einem der Ansprüche 1 oder 2, bei dem ein spektralfluorimetrischer Detektor (300) geeicht wird, der eine Lichtquelle (310) umfaßt, die einen zu eichenden Anregungsmonochromator (320) versorgt, der geeignet ist, einen monochromatischen Anregungslichtstrahl (2) in Richtung einer Meßzelle (330) zu liefern, die unter Wirkung des monochromatischen Anregungslichtstrahls (2) per Fluoreszenz einen monochromatischen Lichtstrahl (2') in Richtung eines zu eichenden Emissionsmonochromators (340) emittiert, der geeignet ist, den resultierenden monochromatischen Fluoreszenzlichtstrahl zu einer Photodiode (350) zu übertragen, **dadurch gekennzeichnet, daß** an der Stelle der Meßzelle (330) der Adapter (404) vorgesehen ist, der einen ersten Eingang (404a) umfaßt, der mit einer ersten optischen Faser (403) verbunden ist, und einen ersten Ausgang (404b), der gegenüber dem zu eichenden Emissionsmonochromator (340) plaziert ist, und daß eine optische Eichvorrichtung bereitgestellt wird, die ein kalibrierter Monochromator (404) ist, der geeignet ist, einen monochromatischen Lichtstrahl mit einer vorgegebenen Wellenlänge λ zu liefern, der von einer Lichtquelle (401) versorgt wird und einen mit dem Eingang der ersten optischen Faser (403) verbundenen Ausgang umfaßt.

4. Eichverfahren (400) nach Anspruch 3, **dadurch gekennzeichnet, daß** der Adapter außerdem einen zweiten Eingang (404a) umfaßt, der gegenüber dem zu eichenden Anregungsmonochromator (320) plaziert ist, und einen zweiten Ausgang (404b), der mit einer zweiten optischen Faser (403) verbunden ist, die mit einer weiteren Eichvorrichtung (402) verbunden ist, die geeignet ist, einen monochromatischen Lichtstrahl mit einer vorgegebenen Wellenlänge λ zu liefern, dessen Ausgang mit einem Sensor (406) verbunden ist, der geeignet ist, den von der letzteren emittierten monochromatischen Lichtstrahl zu erfassen.

5. Eichverfahren (400) nach Anspruch 4, **dadurch gekennzeichnet, daß** der Adapter (404) ein Gehäuse umfaßt, bei dem zwei gegenüberliegende parallele Wände mit einem ersten und einem zweiten Eingang (404a) ausgestattet sind, die einander gegenüberliegen, und bei dem die beiden anderen parallelen Wände mit dem ersten und dem zweiten Ausgang (404b) ausgestattet sind.

6. Eichverfahren (400) nach Anspruch 5, **dadurch gekennzeichnet, daß** der erste und der zweite Ausgang (404b) einander gegenüberliegend positioniert sind, und daß im Inneren des Adaptergehäuses (404) ein Spiegel (405) mit doppelten reflektierenden Flächen vorgesehen ist, von dem eine erste reflektierende Fläche gegenüber dem ersten Eingang (403) und dem ersten Ausgang (404b) positioniert ist, und von dem eine zweite reflektierende Fläche gegenüber dem zweiten Eingang (404a) und dem zweiten Ausgang (404b) positioniert ist, wobei der Spiegel (405) derart ausgerichtet ist, daß ein optischer Strahl, der durch den ersten Eingang, entsprechend den zweiten Eingang eintritt, aus dem ersten Ausgang, entsprechend dem zweiten Ausgang austritt.

7. Eichverfahren (400) nach Anspruch 5, **dadurch gekennzeichnet, daß** der erste und der zweite Ausgang (404b) versetzt positioniert sind, und daß im Inneren des Adaptergehäuses (404) ein erster Spiegel (405) vorgesehen ist, dessen reflektierende Oberfläche gegenüber dem ersten Eingang und Ausgang (404a, 404b) plaziert ist, und ein zweiter Spiegel (405), dessen reflektierende Oberfläche gegenüber dem zweiten Eingang und Ausgang (404a, 404b) positioniert ist, wobei der erste Spiegel (405) derart ausgerichtet ist, daß ein optischer Strahl, der durch den ersten Eingang (404a) eintritt, aus dem ersten Ausgang (404b) austritt, und der zweite Spiegel derart ausgerichtet ist, daß ein optischer Strahl, der durch den ersten Eingang (404a) eintritt, durch den zweiten Ausgang (404b) austritt.

8. Eichverfahren (400) nach einem der Ansprüche 1 oder 2, bei dem ein spektralfluorimetrischer Detektor (300) geeicht wird, der eine Lichtquelle (310) umfaßt, die einen Anregungsmonochromator (320) versorgt, der geeignet ist, einen monochromatischen Anregungslichtstrahl (2) in Richtung einer Meßzelle (330) zu liefern, die unter Wirkung des monochromatischen Anregungslichtstrahls (2) per Fluoreszenz einen monochromatischen Lichtstrahl (2') in Richtung eines Emissionsmonochromators (340) emittiert, der geeignet ist, den resultierenden monochromatischen Fluoreszenzlichtstrahl zu einer Photodiode (350) zu übertragen, **dadurch gekennzeichnet, daß** an der Stelle der Meßzelle (330) der Adapter (404) vorgesehen ist, der einen Eingang (404a) umfaßt, der gegenüber dem zu eichenden Anregungsmonochromator (320) plaziert ist, und einen Ausgang (404b), der mit einer optischen Faser (403) verbunden ist, die am Ausgang mit der optischen Eichvorrichtung (402) verbunden ist.

9. Eichverfahren (400) nach einem der Ansprüche 4 bis 8, **dadurch gekennzeichnet, daß** die optische Eichvorrichtung des zu eichenden Anregungsmonochromators (320) ein kalibrierter Monochromator (402) ist, der geeignet ist, einen monochromatischen Lichtstrahl mit einer vorgegebenen Wellenlänge λ zu liefern, der am Ausgang mit einer Photodiode (406) verbunden ist.

10. Eichverfahren (400) nach einem der Ansprüche 4 bis 8, **dadurch gekennzeichnet, daß** die optische Eichvorrichtung des zu eichenden Anregungsmonochromators (320) ein optisches Gitter (402) ist, das geeignet ist, mehrere unabhängige monochromatische Lichtstrahlen zu liefern, das am Ausgang mit einer Photodiodenzeile (406) verbunden ist.

11. Eichverfahren (600) nach einem der Ansprüche 1 oder 2, bei der ein spektrophotometrischer Detektor (500) geeicht wird, der eine Lichtquelle (510) umfaßt, die einen Anregungsmonochromator (520) versorgt, der geeignet ist, einen monochromatischen Anregungslichtstrahl (2) in Richtung eines Produktes (531) zu liefern, das im Inneren eines Meßbehälters (530) positioniert ist, wobei der aus dem Meßbehälter (530) austretende monochromatische optische Strahl (2) von einer Photodiode (550) erfaßt wird, **dadurch gekennzeichnet, daß** an der Stelle des Meßbehälters (530) der Adapter (604) vorgesehen ist, der ein Gehäuse umfaßt, bei dem zwei senkrechte Wände mit zwei entsprechenden Öffnungen (604a, 604b) ausgestattet sind, eine Eingangsöffnung (604a) gegenüber dem Ausgang des zu eichenden Anregungsmonochromators (520) positioniert ist, und eine Ausgangsöffnung (604b) mit der optischen Faser (603) verbunden ist.

12. Eichverfahren (600) nach Anspruch 11, **dadurch gekennzeichnet, daß** im Inneren des Adaptergehäuses (604) ein Spiegel (605) vorgesehen ist, dessen reflektierende Fläche gegenüber den Öffnungen (604a, 604b) derart positioniert ist, daß ein optischer Strahl, der durch die Eingangsöffnung (604a) eintritt, durch die Ausgangsöffnung (604b) austritt, wobei der Spiegel (605) in einer Höhe in der Größenordnung von 15 mm vom Boden des Adaptergehäuses plaziert ist.

13. Eichverfahren nach Anspruch 11, **dadurch gekennzeichnet, daß** im Inneren des Adaptergehäuses (604) ein Spiegel (605) vorgesehen ist, der in einer Höhe in der Größenordnung von 8 mm vom Boden des Adapters positioniert ist, wobei die reflektierende Fläche des Spiegels (605) gegenüber den Öffnungen (604a, 604b) plaziert ist, der Spiegel derart ausgerichtet ist, daß ein optischer Strahl, der durch die Eingangsöffnung (604a) eintritt, durch die Ausgangsöffnung (604b) austritt.

14. Eichverfahren (600) nach einem der Ansprüche 11 bis 13, **dadurch gekennzeichnet, daß** die optische Eichvorrichtung, die am Ausgang der optischen Faser (603) vorgesehen ist, ein kalibrierter Monochromator (602) ist, der einen monochromatischen Lichtstrahl mit einer vorgegebenen Wellenlänge λ liefert, wobei der kalibrierte Monochromator am Ausgang mit einer Photodiode (606) verbunden ist.

15. Eichverfahren (600) nach einem der Ansprüche 11 bis 13, **dadurch gekennzeichnet, daß** die optische Eichvorrichtung (602), die mit dem Ausgang der optischen Faser (603) verbunden ist, ein optisches Gitter (602) ist, das geeignet ist, mehrere unabhängige monochromatische Strahlen zu liefern, dessen Ausgang mit einer Photodiodenzeile (606) verbunden ist.

## Claims

1. A method of calibrating a member (320, 340, 520) supplying a monochromatic light beam placed in a spectroscopic apparatus (300; 500) which comprises:
· a light source (310, 510);
· a housing (301, 501) receiving a measurement cell (330, 530) including a substance that is to be subjected to an optical measurement when illuminated by the source (310, 510); and
· a sensor (350; 550) suitable for picking up at least one monochromatic light beam (2, 2') leaving the housing (301, 501) after interacting with the substance (330, 530) being subjected to measurement;
in which method there are provided:
· an optical calibration device (402; 602) suitable for supplying at least one monochromatic light beam;
· an adapter (404; 604) having two openings (404a, 404b; 604a, 604b) in optical communication with each other;
· an optical fiber (203; 403; 603) having one end connected to the calibration device and the other end connected to a first one of the openings (404a, 404b) of the adapter (404; 604) to transmit the monochromatic light beam between said light calibration device (202; 402; 502) and said adapter (204; 404; 604), and vice versa;
the method being **characterized in that** the adapter (404; 604) is placed in the measuring housing (301; 501) taking the place of the measurement cell (330; 530), in such a manner that the second one of the openings (404b; 604a) of the adapter is in register with the member to be calibrated (320, 340; 520).

2. A calibration method according to claim 1, **characterized in that** the adapter (404; 604) comprises firstly a housing having at least two perpendicular walls provided with respective openings (404a, 404b; 604a, 604b), one opening (404a; 604a) being connected to the optical fiber (403; 603) and another opening (404b; 604b) being positioned facing said optical member to be calibrated (320, 340; 520), and secondly at least one mirror (405; 605) placed inside said housing, facing said openings (404a, 404b, 604a, 604b) in such a manner that a light ray entering via one of the openings leaves via the other, and vice versa.

3. A calibration method according to claim 1 or claim 2, in which a spectrofluorometer detector (300) is calibrated, which detector comprises a light source (310) feeding an excitation monochromator (320) to be calibrated, suitable for supplying a monochromatic excitation light beam (2) to a measurement cell (330) which, under the effect of said monochromatic excitation light beam (2) fluoresces, thereby emitting a monochromatic light beam (2') towards an emission monochromator (340) to be calibrated that is suitable for transmitting said resulting monochromatic light beam obtained by fluorescence to a photodiode (350), the method being **characterized in that** said adapter (404) is put in the place of said measurement cell (330), the adapter having a first inlet (404a) connected to a first optical fiber (403) and a first outlet (404b) placed facing the emission monochromator (340) to be calibrated, and **in that** an optical calibration device is provided which is a calibrated monochromator (404) suitable for supplying a monochromatic light beam at a given wavelength λ, said device being fed by a light source (401) and having an outlet connected to the inlet of the first optical fiber (403).

4. A calibration method according to claim 3, **characterized in that** said adapter further comprises a second inlet (404a) placed facing the excitation monochromator to be calibrated (320), and a second outlet (404b) connected to a second optical fiber (403) connected to another calibration device (402) suitable for supplying a monochromatic light beam at a given wavelength λ, its outlet being connected to a sensor (406) suitable for picking up said monochromatic light beam emitted thereby.

5. A calibration method according to claim 4, **characterized in that** said adapter (404) comprises a housing having two opposite parallel walls provided with first and second inlets (404a) positioned facing each other, and whose other two parallel walls are provided with first and second outlets (404b).

6. A calibration method according to claim 5, **characterized in that** the first and second outlets (404b) are positioned facing each other, and **in that** a mirror (405) is provided inside said adapter housing (404), the mirror having two reflecting faces, a first one of which is positioned facing the first inlet (403) and the first outlet (404b), and a second one of which is positioned facing the second inlet (404a) and the second outlet (404b), said mirror being oriented in such a manner that a light ray entering via the first inlet leaves via the first outlet and a light ray entering via the second inlet leaves via the second outlet.

7. A calibration method according to claim 5, **characterized in that** the first and second outlets (404b) are positioned in offset manner, and **in that** first and second mirrors (405) are provided inside the housing of the adapter (404), the first mirror (405) having a reflecting surface placed facing the first inlet and outlet (404a, 404b) and the second mirror (405) having a reflecting surface positioned facing the second inlet and outlet (404a, 404b), the first mirror (405) being oriented in such a manner that a light ray entering via the first inlet (404a) leaves via the first outlet (404b), and the second mirror being oriented in such a manner that a light ray entering via the first inlet (404a) leaves via the second outlet (404b).

8. A calibration method according to claim 1 or claim 2, in which a spectrofluorometer detector (300) is calibrated, the detector comprising a light source (310) which feeds an excitation monochromator (320) suitable for providing a monochromatic excitation light beam (2) to a measurement cell (330) which, under the effect of said monochromatic excitation light beam (2) fluoresces to emit a monochromatic light beam (2') to an emission monochromator (340) suitable for transmitting said resulting monochromatic light beam generated by fluorescence to a photodiode (350), the method being **characterized in that** said adapter (404) is provided in the face of said measurement cell (330), the adapter having an inlet (404a) placed facing the excitation monochromator (320) to be calibrated and an outlet (404b) connected to an optical fiber (403) having its outlet connected to the optical calibration device (402).

9. A calibration method according to any one of claims 4 to 8, **characterized in that** the optical calibration device of the excitation monochromator (320) to be calibrated is a calibrated monochromator (402) suitable for supplying a monochromatic light beam at a given wavelength λ having its outlet connected to a photodiode (406).

10. A calibration method according to any one of claims 4 to 8, **characterized in that** the optical calibration device of the excitation monochromator (320) to be calibrated is an optical grating (402) suitable for supplying a plurality of independent monochromatic light beams having its outlet connected to a strip of photodiodes (406).

11. A calibration method according to claim 1 or claim 2, in which a spectrophotometer detector (500) is calibrated, the detector comprising a light source (510) which feeds an excitation monochromator (520) suitable for supplying a monochromatic excitation light beam (2) to a substance (531) positioned inside a measurement vessel (530), the monochromatic light beam (2) leaving said measurement vessel (530) being picked up by a photodiode (550), the method being **characterized in that** in the place of said measurement vessel (530) there is provided said adapter (604) comprising a housing having two perpendicular walls provided with respective openings (604a, 604b), comprising an inlet opening (604a) positioned facing the outlet of the excitation monochromator to be calibrated (520) and an outlet opening (604b) connected to the optical fiber (603).

12. A calibration method according to claim 11, **characterized in that** a mirror (605) is provided inside the housing of the adapter (604), the reflecting face of the mirror being positioned facing said openings (604a, 604b) in such a manner that a light ray entering via the inlet opening (604a) leaves via the outlet opening (604b), said mirror (605) being placed at a height of about 15 mm above the bottom of the adapter housing.

13. A calibration method according to claim 11, **characterized in that** a mirror (605) is provided inside the housing of the adapter (604), the mirror being positioned at a height of about 8 mm from the bottom of said adapter, the reflecting face of the mirror (605) being placed facing said openings (604a, 604b), said mirror being oriented in such a manner that a light ray entering via the inlet opening (604a) leaves via the outlet opening (604b).

14. A calibration method according to any one of claims 11 to 13, **characterized in that** the optical calibration device provided at the outlet of the optical fiber (603) is a calibrated monochromator (602) providing a monochromatic light beam at a given wavelength λ, said calibrated monochromator having its outlet connected to a photodiode (606).

15. A calibration method according to any one of claims 11 to 13, **characterized in that** the optical calibration device (602) connected to the outlet of the optical fiber (603) is an optical grating (602) suitable for providing a plurality of independent monochromatic beams, with the outlet thereof being connected to a strip of photodiodes (606).
